# EUROPEAN PATENT APPLICATION

(11) **EP 3 718 730 A1**
(43) Date of publication of application: **07.10.2020**
(21) Application number: 20167821.6
(22) Date of filing: 02.04.2020
(51) Int. Cl.: B29C 44/32, B29C 44/34, B29C 44/24, B29C 44/02, B05D 1/28, B05D 3/02, B32B 5/20, B65D 65/40

(54) **LAYERED PROTECTIVE PACKAGING**

(30) Priority: 02.04.2019 GB 201904614
(71) Applicant: YM Group Limited, Leeds LS12 5XX (GB)
(72) Inventor: Cooper, Simon, Leeds, LS12 5XX (GB); Richardson, Lee, Leeds, LS12 5XX (GB); Goodman, Stephen, Leeds, LS12 5XX (GB)
(74) Representative: Barker Brettell LLP

(57) **Abstract**

A method of manufacturing layered protective packaging materials and a protective packaging product is described. In an embodiment the method comprises the steps of: selecting one or more layers of a substrate; treating at least one surface of at least one of said layers with a coating composition; drying the layers to substantially remove the water content from the coating composition; and applying heat and/or radiation to the coating composition to volumetrically expand the coating composition to transform the treated layer into a protective layer. The step of treating the layer with the coating composition uses a flexographic coating technique.

## Description

### Field

The present invention relates to layered protective packaging and, in particular a method for manufacturing layered protective packaging materials and a product formed using the method.

### Background

It is well known that items in transit often require protection from impacts that occur during transportation. Conventional protective packaging materials include padding or filler materials that provide impact and/or thermal insulation. The most ubiquitous example, bubble wrap, is often used, although inserts, foam pellets or the like are also used.

A complementary example is mailers lined with padded material, often bubble wrap sheet. This typically takes the form of an outer sleeve made of cardboard or paper and an inner envelope sheet of bubble wrap into which the product to be protected can be placed.

However, such mailers are difficult to manufacture due to the need to seal the liner. Additionally, these mailers are difficult to recycle due to the differing bonded materials used.

Impact resistance is another important end result of such mailers, which typically requires bulky materials or support structures to provide this, making the mailers costly to transport and store whilst empty due to the additional space they occupy.

The present invention aims to at least ameliorate the above-mentioned deficiencies by providing a layered protective packaging material that provides impact resistance, high strength is light-weight and more easily recycled.

### Summary

According to a first aspect of the present invention there is provided a method of manufacturing layered protective packaging materials, said method comprising the steps of: selecting one or more layers of a substrate; treating at least one surface of at least one of said layers with a coating composition; drying the layers to substantially remove the water content from the coating composition; and applying heat and/or radiation to the coating composition to volumetrically expand the coating composition to transform the treated layer into a protective layer; whereby the step of treating the layer with the coating composition uses a flexographic coating technique.

The present method provides a method of manufacturing a layered protective packaging material that provides the desired impact resistance, high strength, and light-weight required for such packaging materials. Additionally, the method of the present disclosure allows for intermediate products of the method to be more easily stored than existing conventional packaging materials. By storing materials prior to the final step of applying heat and/or radiation to the coating composition (i.e. before volumetric expansion), the volume of the layered protective packaging is greatly reduced compared to after volumetric expansion. This allows a far greater number of packaging to be stored or transported than conventional protective packaging materials.

Additionally, in comparison to known techniques for handling such coating compositions, the present invention utilises flexographic coating. Flexographic coating allows for the coating composition to be applied in a precise manner, focussing on placement of the coating composition in an ideal patterning, and location, to maximise the protective properties of the protective packaging whilst avoiding the need to apply the coating composition throughout the layer.

In an embodiment, the flexographic coating technique may further comprise a pan roller, a transfer cylinder and a plate cylinder. This arrangement allows a pan roller to collect the liquid coating composition in a controlled manner before this is transferred to a layer of the substrate using a transfer cylinder to collect the coating composition from the pan roller and to apply the composition to a backing sheet arranged on the plate cylinder. The plate cylinder can then be used to transfer the composition from the backing sheet onto a layer of the substrate. It can be appreciated that alternative names may be given for the rollers described above, such as anilox rollers and impression cylinders.

Additionally, the plate cylinder may comprise a plurality of transfer pads arranged in a predetermined pattern. In one preferred embodiment the transfer pads may be Velcro™ (hook and loop fasteners), sponge pads or similar materials. In such embodiments, the transfer pads are typically the loop part of the fasteners. In said embodiment or in general, it can be appreciated that the transfer pads may act to transfer the coating composition from the transfer cylinder to one or more surfaces of one or more layers of the substrate.

A coverage of the liquid coating composition of X g per square metre may be applied, X having a range between 5 and 100. The coating coverage is typically applied to an inside surface of the layer. Patterning, such as a hexagonal pattern may be used, with a series of substantially circular applications forming a dotted surface. The patterning may be a predetermined pattern, as noted above, or a random distribution may be used.

In a further embodiment the method may comprise the step of: applying an adhesive to outer edges of one or more surfaces of the packaging substrate prior to treating a surface of a layer with the coating composition. A coverage of the adhesive of Y g per square metre may be applied, Y having a range between 5 and 30. Applying the adhesive prior to treatment of the surface, such as via a multi flexographic system or via an additional roller system, is preferential to applying the treatment after treatment with the coating composition to mitigate against disruption to patterning of the coating composition.

The method may further comprise the steps of pressing at least one treated layer and another layer together to a form a multi-substrate treated layer. The multi-substrate treated layer can then be transformed as per the treated layer described above. It can be appreciated that the layer may be another treated layer that may or may not also have adhesive applied. Alternatively, said another layer may have the only surface with adhesive applied, or may additionally only have adhesive applied, or may be free from adhesive and coating composition. The step of pressing typically involves bringing the substrates together to embody the coating composition under tension.

The method may further comprise the step of winding said protective packaging material onto a reel for storage prior to the step of applying heat and/or radiation. This allows the material to be stored in a convenient and minimised manner prior to expansion of the packaging using heat and/or radiation that increases the storage space requirement.

The step of applying heat and/or radiation comprises may comprise the step of using infra-red emitters as a heat source to activate the coating composition to form the protective packaging. It can be appreciated that such emitters may be supplied separately to allow an end-user to transform the treated layer into a protective layer. Exemplary temperatures required to transform the layer can be between 60°C and 130°C, with volumetric expansion at least partially controllable by altering the temperature applied up to a maximum temperature, typically around 150°C.

According to a second aspect of the present disclosure there is provided a protective packaging product formed using the method of the first aspect.

In this aspect, the plurality of layers may comprise two layers. Additional layers may be provided to allow the amount of impact protection to be tailored and controlled according to the desired application. It can be more beneficial to apply additional layers rather than thicker layers of coating composition, which typically take longer to dry or cure than thinner layers. Accordingly, a multi-pass technique may be utilised to allow layers to be built up into the final protective packaging material having multiple layers.

In an embodiment of either aspect the substrate may be paper. Typically, paper having a volume of between 40 gsm and 200 gsm can be used, although it can be appreciated that different volumes can be selected depending upon the rigidity and thickness of final packaging material required. Alternative substrates include paperboard, wood, metallic paper, metallic paperboard, foil or plastic film. Further substrates that may be used as one or more additional layers include fibreboards, chipboards, corrugated boards, corrugated mediums, solid bleached boards (SBB), solid bleached sulphite boards (SBS), solid unbleached board (SLB), white lined chipboards (WLC), kraft papers, kraft boards, coated papers, binder boards, reduced basis weight substrates, metallic papers, metallic paperboards, foils, plastics or plastic films.

Typically, the coating composition of any aspect may be microspheres. Microspheres typically have a polymeric shell, such as polyacrylonitrile, around a hydrocarbon core. Example microspheres include those sold under the trade name DUALITE™ and other similar examples such as those sold under the trade name EXPANCEL™.

The expandable microspheres typically have an unexpanded size, including from about 10 microns to about 40 microns in diameter that increases in the presence of heat and/or radiation by about 3 times to about 10 times. Additionally, expansion typically causes changes into a foam-like material, which assists to provide the desired impact resistance and insulation.

The coating composition may expand to between 10 and 100 times its original volume. In some embodiments the coating composition may expand at least 100% after the application of the heat and/or radiation. As an example, the composition may expand by any range between 100 and 500%, 500% and 1000% or up to 2500%. This degree of expansion transforms the treated layer into a protective layer, providing impact resistance (and thermal insulation).

The coating composition may comprise a water-based polymer, such as vinyl acetate ethylene dispersion, polyvinyl acetate, polyvinyl acetate polyvinyl alcohol, dextrin stabilized polyvinyl acetate, polyvinyl acetate copolymers, vinyl acetate ethylene copolymers, vinyl acrylic, styrene acrylic, acrylic, styrene butyl rubber, polyurethane and mixtures thereof. Particularly preferred emulsion polymer components are vinyl acetate ethylene dispersion, vinyl acrylic, styrene acrylic, acrylic, and polyvinyl acetate. Typically the water-based polymer is prepared by emulsion polymerisation. Furthermore, as noted above, the coating composition may further comprise a plurality of expandable microspheres having an expansion temperature and optionally an additive.

It can be readily appreciated that features described in relation to one aspect may be readily applied to any other aspect. These and other aspects of the invention will be apparent from, and elucidated with reference to, the embodiments described hereinafter.

### Brief description of Drawings

Embodiments will be described, by way of example only, with reference to the drawings, in which
figure 1 illustrates an exemplary embodiment of a apparatus for performing a method of one aspect of the present invention, said apparatus showing a flexographic system for applying coating composition to a layer of a substrate;
figure 2 illustrates an example backing sheet for mounting to the apparatus of figure 1 and comprising applicators for applying the coating composition;
figure 3 illustrates a part of the apparatus of figure 1, with a layer of a substrate after application of the coating composition by the applicators of figure 2; and
figure 4 shows machinery incorporating the apparatus of figure 1.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

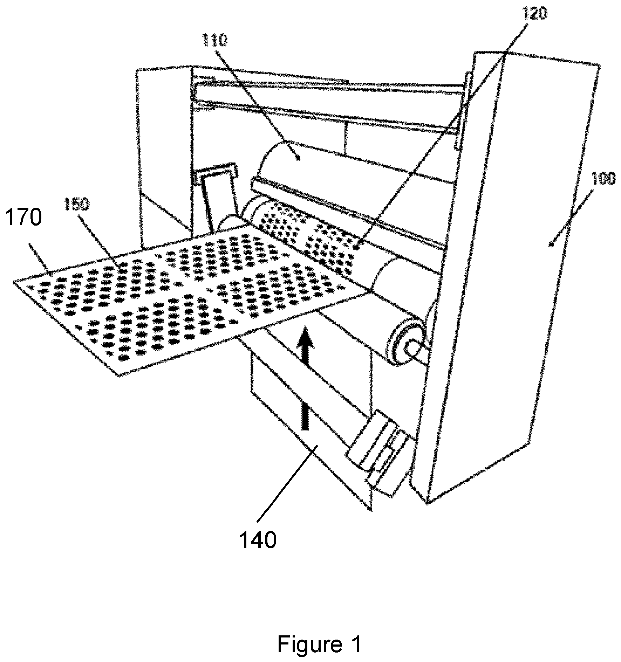

Figure 1 shows an exemplary embodiment of a system for performing a method of one aspect of the present invention, said system showing a flexographic system 100 for applying a coating composition to a layer of a substrate 140. In particular, a transfer roller or cylinder 110 is shown for collecting coating composition from a pan roller (not shown) that acts to collect coating composition. It can be appreciated that the coating composition may be directly applied to the transfer roller 110.

A plate cylinder 120 adjacent to the transfer cylinder 110 collects coating composition from the transfer cylinder 110 using a series of transfer pads arranged on a backing sheet 160 placed onto the plate cylinder 120. The use of a backing sheet allows the patterning to be easily changed compared to applying the transfer pads direct to the plate cylinder.

An impression cylinder 130 may also be used to guide and press the substrate 140 against the plate cylinder 120. The impression cylinder allows the transfer pads to transfer coating composition to the substrate in the desired pattern. The coating composition then forms a series of patterned deposits 150 on the layer of the substrate 140.

The coating composition comprises microspheres having a polymeric shell, such as polyacrylonitrile, around a hydrocarbon core. Example microspheres include those sold under the trade name DUALITE™ and other similar examples such as those sold under the trade name EXPANCEL™.

The expandable microspheres typically have an unexpanded size, from about 10 microns to about 40 microns in diameter that increases in the presence of heat and/or radiation by about 3 times to about 10 times. Additionally, expansion typically causes changes into a foam-like material, which assists to provide the desired impact resistance and insulation.

The coating composition generally comprises a water-based polymer, such as vinyl acetate ethylene dispersion, polyvinyl acetate, polyvinyl acetate polyvinyl alcohol, dextrin stabilized polyvinyl acetate, polyvinyl acetate copolymers, vinyl acetate ethylene copolymers, vinyl acrylic, styrene acrylic, acrylic, styrene butyl rubber, polyurethane and mixtures thereof. Particularly preferred emulsion polymer components are vinyl acetate ethylene dispersion, vinyl acrylic, styrene acrylic, acrylic, and polyvinyl acetate. Typically the water-based polymer is prepared by emulsion polymerisation. Furthermore, as noted above, the coating composition may further comprise a plurality of expandable microspheres having an expansion temperature and optionally an additive.

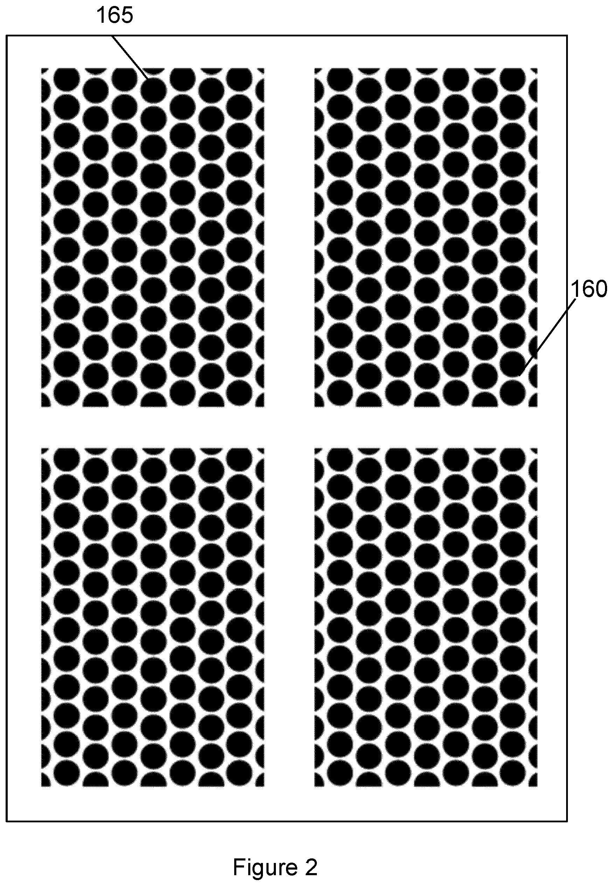

Figure 2 shows an example backing sheet 160 according to an embodiment of the present invention. The backing sheet is typically paper or other flexible sheet. As shown, a series of transfer pads 165 are arranged on the backing sheet 160 in an ordered pattern. In the example shown a hexagonal pattern is used. The transfer pads 165 are typically Velcro™ (hook and loop fasteners - in this aspect the loops) and are circular in shape (approximate diameter 1.2 cm, although it can be appreciated that other diameters may be used). The primary purpose of the transfer pads is to wick coating composition from the transfer cylinder 110 and apply the coating composition to the layer of the substrate 140.

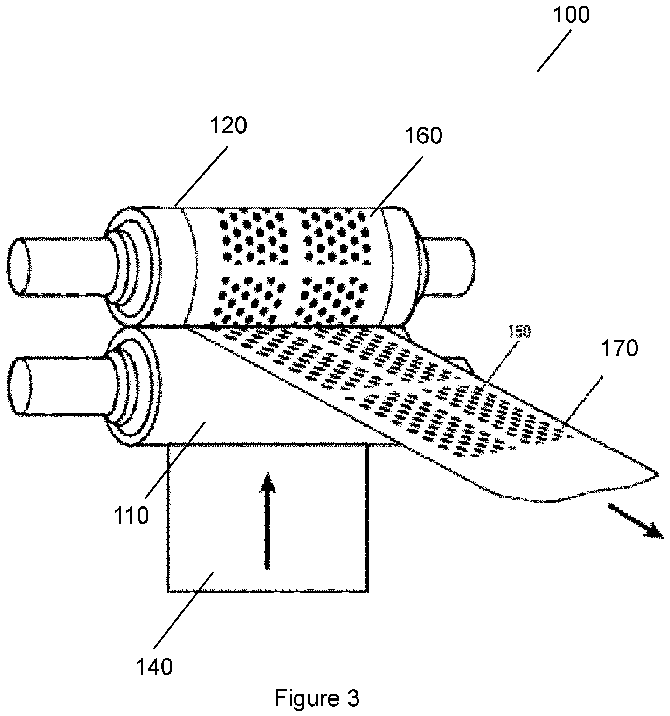

Figure 3 shows the substrate 170 after application of the coating composition from the backing sheet 160. The coating composition forms a series of deposits 150 on the surface.

Once applied, the coated substrate is dried or cured to set the coating composition. This removes water content from the coating composition. Low intensity Infra-red is typically used to dry the coating composition, applied at a low intensity to ensure that the coating composition is not of sufficient intensity to cause expansion. It can be appreciated that heat, air or the like could be used to dry the coated substrate. Removal of at least some of the water content of the coating composition can aid in the later thermal activation and expansion of the coating composition.

After the deposition, one or more layers may be adhesively pressed against the layer 140 to form a multi-layered substrate. The adhesive is typically applied prior to application of the coating composition. The multi-layered substrate can then be stored as needed.

In order to activate and prepare the protective packaging, heat and/or radiation is applied to the coating composition (typically indirectly) to volumetrically expand the coating composition. This transforms the treated layer containing the coating composition into a protective layer. The expansion transforms the coating composition into a foam.

The coating composition may expand to between 10 and 100 times its original volume. In some embodiments the coating composition may expand at least 100% after the application of the heat and/or radiation. As an example, the composition may expand by any range between 100 and 500%, 500% and 1000% or up to 2500%. This degree of expansion transforms the treated layer into a protective layer, providing impact resistance (and thermal insulation).

Once the protective layer is formed, the multi-layered substrate can then be used as protective packaging material for use in protective padded mailers or the like. It may also be used as a packaging material in place of foam or pellets or the like.

It can be appreciated that although described above in relation to a multi-layered substrate there may be applications and embodiments that do not require a multilayer substrate. Drying and activation of the coating composition as described above may still be achieved to provide a substrate having protective packaging properties.

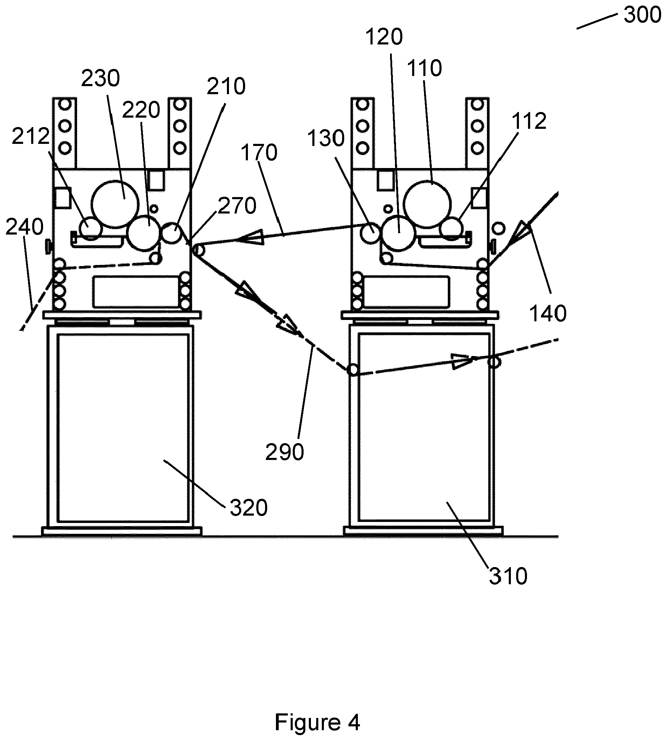

Figure 4 shows a section of the machinery 300 used to carry out the method described above. In particular, for creating a multi-layered substrate. In figure 4 a liquid coating machine 310 and an adhesive coating machine 320 are shown.

As shown, a substrate 140 is introduced to the liquid coating machine 310 from a spool or earlier processing machine. The substrate is typically paper, or cardboard or the like, although plastics may also be used. The substrate is typically fed into the machine to present an inner surface to a series of flexographic rollers, which will be described below.

The liquid coating machine 310 comprises a transfer roller 110 that collects coating composition from a pan roller 112 that in turn collects a coating composition from a pan or similar source. As noted earlier in relation to figures 1 and 3, a plate cylinder 120 having transfer pads 160 receives the adhesive from an impression cylinder 130 and transfers the adhesive to an underside of the substrate 140 as the substrate is fed through the machine. This produces a coated substrate 170 having a patterned surface 150 on an inner surface of the coated substrate 170.

At this point the coated substrate may be dried or cured to stabilise the patterned surface. As noted above, infra-red or other low intensity drying or curing processes may be used. Additionally or alternatively this step may occur after the step described below.

As shown, a second substrate or layer 240 is fed into an adhesive coating machine 320. This layer 240 has an adhesive coating applied to an outer surface in a similar manner to the process used to apply the coating composition, namely applying an adhesive coating collected by a transfer roller 210, pan roller 212, plate cylinder 220 and impression cylinder 240. It can be appreciated that the transfer pads 160 of the liquid coating machine may be replaced with alternative shaped transfer pads for the adhesive coating machine, or indeed impressions may be used on the impression cylinder 240 to apply the adhesive to the substrate 240.

The adhesive coated substrate 270 is then pressed against the coated substrate 170 to form a multi-substrate 290. The step of pressing typically involves bringing the substrates together to embody the coating composition under tension. The multisubstrate is then subject to heat and/or radiation to lower the water content of the coating composition (if not already done). Finally, as described above, the substrate is then subject to infra-red, heat or the like to transform the impressions 150 of the coating composition, causing them to expand in volume and form a padding layer between the adhesive coated substrate and the coated substrate. Such products may be used as padded mailers or the like, or for other applications that benefit from protective layered padding as described above.

From reading the present disclosure, other variations and modifications will be apparent to the skilled person. Such variations and modifications may involve equivalent and other features which are already known in the art of packaged mailers and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable subcombination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A method of manufacturing layered protective packaging materials, said method comprising the steps of:
selecting one or more layers of a substrate;
treating at least one surface of at least one of said layers with a coating composition;
drying the layers to substantially remove the water content from the coating composition; and
applying heat and/or radiation to the coating composition to volumetrically expand the coating composition to transform the treated layer into a protective layer;
whereby the step of treating the layer with the coating composition uses a flexographic coating technique.

2. The method of claim 1, wherein the flexographic coating technique further comprises a pan roller, a transfer cylinder and a plate cylinder.

3. The method of claim 2, wherein the plate cylinder comprises a plurality of transfer pads arranged in a pattern.

4. The method of claim 3 wherein the transfer pads are one or more of Velcro™, sponge pads or similar materials.

5. The method of claim 3 or claim 4, wherein the transfer pads transfer the coating composition from the transfer cylinder to one or more surfaces of one or more layers of the substrate.

6. The method of any preceding claim further comprising the steps of:
applying an adhesive to outer edges of one or more surfaces of the packaging substrate prior to treating a surface of a layer with the coating composition; and
pressing at least one treated layer and another layer together to form a multi-substrate treated layer.

7. The method of any preceding claim further comprising the step of winding said protective packaging material onto a reel for storage prior to the step of applying heat and/or radiation.

8. The method of any preceding claim wherein the step of applying heat and/or radiation comprises the step of using infra-red emitters as a heat source to activate the coating composition to form the protective packaging.

9. A protective packaging product formed using the method of any preceding claim.

10. The protective packaging product of claim 9, wherein the plurality of layers comprises two layers.

11. The protective packaging product of claim 9 or claim 10, wherein the substrate is paper.

12. The protective packaging product of claim 9 or claim 10 or claim 11, wherein the coating composition is microspheres.

13. The protective packaging product of any one of claims 9 to 12, wherein the coating composition expands at least 100% after the application of the heat and/or radiation.

14. The protective packaging product of any one of claims 9 to 13, wherein the coating composition comprises a water-based polymer prepared by emulsion polymerisation.

15. The protective packaging product of claim 14, wherein the coating composition further comprises a plurality of expandable microspheres having an expansion temperature and optionally an additive.
